# EUROPÄISCHE PATENTSCHRIFT

(11) **EP 2 662 328 B1**
(45) Veröffentlichungstag und Bekanntmachung des Hinweises auf die Patenterteilung: **15.08.2018**
(21) Anmeldenummer: 13002356.7
(22) Anmeldetag: 03.05.2013
(51) Int. Cl.: B01J 19/24, C01B 11/02, A61L 2/16, B01J 7/00, B01J 14/00

(54) **Verfahren und Vorrichtung zur Erzeugung von Chlordioxid**
Method and device for producing chlorine dioxide
Procédé et dispositif destinés à la production de dioxyde de chlore

(30) Priorität: 07.05.2012 EP 12003597
(43) Veröffentlichungstag der Anmeldung: 13.11.2013
(73) Patentinhaber: Schmid, Erich, 67435 Neustadt (DE)
(72) Erfinder: Schmid, Erich, 67435 Neustadt (DE)
(74) Vertreter: Zellentin & Partner mbB Patentanwälte

(56) Entgegenhaltungen:
- WO-A2-2009/084854
- DE-A1- 3 128 817
- DE-A1- 3 218 475
- DE-A1-102010 011 699

## Beschreibung

Die vorliegende Erfindung betrifft ein Verfahren und eine Vorrichtung zur Erzeugung einer Chlordioxid-Lösung.

Chlordioxid ist eine chemische Verbindung von Chlor und Sauerstoff mit der Summenformel ClO₂. Bei Raumtemperatur ist Chlordioxid ein bernsteinfarbenes, explosives und giftiges Gas mit stechendem, chlorähnlichem Geruch.

Die Anwendungen von Chlordioxid beruhen auf seiner Wirkung als Oxidationsmittel. Es ist das wichtigste Bleichmittel der Elementar-Chlor-Freien Bleiche von Zellstoff, insbesondere bei Papier, in der es elementares Chlor fast vollständig ersetzt hat. Zunehmend wird Chlordioxid auch zur Desinfektion vor der Abfüllung von PET-Flaschen verwendet. Weiterhin wird es in der Trinkwasseraufbereitung zur Desinfektion an Stelle von Chlor eingesetzt. Es ist gegen Bakterien genauso oder besser wirksam als Chlor und im Gegensatz zu Chlor auch gegen Viren und viele Protozoen (Einzeller) wirksam.

Zur Chlordioxiderzeugung können viele Verfahren verwendet werden. Am häufigsten ist die Verwendung von Salzsäure und Natriumchlorit als Ausgangskomponenten, da die Herstellung von Chlordioxid aus diesen beiden Komponenten von der Trinkwasserverordnung zugelassen ist. Die Umsetzung erfolgt nach der Gleichung:

5 NaClO₂ + 4 HCl → 4 ClO₂ + 5 NaCl + 2 H₂O

Es können aber auch andere Substanzen mit Natriumchlorit bzw. allgemein mit einem Chlorit umgesetzt werden. Anstelle von Salzsäure eignen sich andere Säuren, wie Schwefelsäure bzw. Säurebildner wie Peroxodisulfate, z. B. Natrium-, Kalium- oder Ammoniumperoxodisulfat, sowie Chlor, Hypochlorige Säure und andere.

Viele Verfahren können zur Chlordioxiderzeugung verwendet werden, denen aber gemeinsam ist, dass man erst am Ort der Anwendung zwei Komponenten mischt, die jeweils flüssig oder pulverförmig sein können. Bei solchen Verfahren ist es nachteilig, dass die Ausgangsstoffe und die bei der Umsetzung gebildeten Nebenprodukte in das zu behandelnde Produkt, zum Beispiel ins Trinkwasser, eingebracht werden. So darf z.B. gemäß der derzeitigen Gesetzeslage in Deutschland ein Grenzwert an Natriumchlorit im Trinkwasser von maximal 0,2 ppm nicht überschritten werden. Außerdem führen die im Überschuss eingesetzten und gebildeten Salze und der durch die Säure niedrige pH-Wert oft zu sehr starker Korrosion, insbesondere an der Dosierstelle der konzentrierten Lösung, selbst bei Edelstahl tritt die sogenannte Lochfraßkorrosion auf.

Gemäß DE 32 39 029 A1 und DE 10 2010 001 699 wird das Problem der Korrosion und der unerwünschten Salze in einem zu behandelnden Produkt wie Trinkwasser durch Austragen des gebildeten Chlordioxids mit Hilfe eines Vakuums aus der Reaktionslösung als Gas und Lösen in frischem Wasser gelöst. Die WO 2009/084854 schlägt einen Reaktor vor, bei dem die Edukte in einen ersten Reaktorraum eingeleitet und dort umgesetzt werden. Das Chlordioxid wird mittels eines Gasstroms, der in einen durch einen Filter abgetrennten, zweiten Reaktorraum eingeleitet wird, ausgetrieben und verdünnt. Der Filter, der eine Glasfritte sein kann, verteilt den Gasstrom sehr fein in der Reaktionslösung, die sich in der ersten Kammer befindet, wobei die Reaktionslösung gleichzeitig durchmischt wird. Ein Reaktor zur Herstellung von Chlordioxid mit mehr als zwei durch gelochte Trennwände getrennten Reaktorkammern ist aus DE3218475 bekannt.

Nachteil aller seitherigen Verfahren ist, dass die Ausgangsmaterialien nur in solchen Konzentrationen verwendet werden können, dass das Chlordioxid in einer Konzentration erzeugt wird, die noch nicht explosionsgefährlich ist. Das sind meist Gehalte um 20 000 ppm. Lösungen in Wasser sind nicht explosiv, sofern sie kein Chlordioxid-Luft-Gemisch mit mehr als 10 Vol.-% Chlordioxid erzeugen können. Auch Vorrichtungen und Verfahren, die zunächst mit konzentrierten Rohstoffen zu arbeiten scheinen, verdünnen vor oder bei der Reaktion die Rohstoffe mit Wasser auf ungefährliche Konzentrationen.

Ein Nachteil der aus DE 32 39 029 A1 und DE 10 2010 001 699 bekannten Verfahren besteht darin, dass bei der diskontinuierlichen Betriebsweise das aus dem Reaktor ausgetragene Gas keine konstante Konzentration an ClO₂, sondern am Anfang der Reaktion eine hohe Konzentration an ClO₂ und dann eine stark abnehmende Konzentration an ClO₂, aufweist, was zu unerwünschten Konzentrationsschwankungen an ClO₂ in einem zu behandelnden Produkt führt. Um diese Konzentrationsschwankungen zu verhindern, ist die Verwendung eines Behälters zum Lösen des gebildeten gasförmigen Chlordioxids in frischem Wasser vor der Überführung dieser Chlordioxidlösung zum zu behandelnden Produkt in den bekannten Verfahren unvermeidbar. Somit wäre es wünschenswert, ein Verfahren bzw. eine Vorrichtung zur Verfügung zu stellen, bei dem bzw. bei der das hergestellte Gasgemisch eine möglichst gleichmäßige Konzentration an ClO₂ während des Prozesses aufweist.

Aufgabe der Erfindung ist es, ein geeignetes Verfahren und eine Vorrichtung zur Herstellung von Chlordioxid zur Verfügung zu stellen, bei denen höhere Konzentrationen von Ausgangsmaterialien ohne Erhöhung des Sicherheitsrisikos verwendet werden. Somit lässt sich eine Vorverdünnung der Ausgangsmaterialien vermeiden.

Als weitere Aufgabe der Erfindung wird die zur Verfügungsstellung eines effizienten Verfahrens und einer Vorrichtung gesehen, durch die ein besonders reines Chlordioxid hergestellt wird, das zur Erzeugung von Trinkwasser oder zur Behandlung von Nahrungsmitteln verwendet werden kann.

Überraschend wurde nun gefunden, dass die oben genannten Nachteile der bisherigen bekannten Verfahren, insbesondere die Explosionsgefahr bei der Verwendung von höheren Konzentrationen der Ausgangsmaterialien, dadurch überwunden werden, dass die zur Herstellung von Chlordioxid notwendigen Ausgangsmaterialien in einen Reaktor dosiert werden, der durch mindestens eine aus einem porösen Material bestehende Trennwand auf zwei bzw. mehrere Reaktorkammern unterteilt ist. Dieser Reaktor ermöglicht eine verbesserte Entfernung des gasförmigen Chlordioxids aus der sauren Restflüssigkeit (Entgasung des Reaktionsgemisches) dadurch, dass er von der Austragsseite der Restflüssigkeit her mit einem Verdünnungsgas durchströmt wird und das gebildete gasförmige Chlordioxid in Gemisch mit Verdünnungsgas aus der ersten Reaktorkammer sofort abgezogen wird.

Die Aufgabe der vorliegenden Erfindung wird daher durch eine Vorrichtung gemäß Anspruch 11 zur Herstellung von Chlordioxid gelöst, die
- einen Reaktor zur Umsetzung von Chlorit mit Säure und
- eine Einrichtung zur Entnahme des gebildeten, gasförmigen Chlordioxids aus dem Reaktor,
umfasst, wobei der Reaktor durch mindestens zwei aus einem porösen Material bestehende Trennwände in mindestens drei Reaktorkammern zur Umsetzung von Chlorit mit Säure unterteilt ist und die Einrichtung zur Entnahme des Chlordioxids eine Vakuumpumpe und eine Gaszufuhr umfasst, wobei die Vakuumpumpe mit der ersten Reaktorkammer verbunden ist und die Gaszufuhr in die letzte Reaktorkammer erfolgt. Die Zufuhr der Edukte erfolgt mit Hilfe von Durchflussbegrenzungsmitteln und dem Vakuum der Vakuumpumpe.

Gegenstand der vorliegenden Erfindung ist auch ein Verfahren gemäß Anspruch 1 zur Herstellung von Chlordioxid, bei dem:
- Chlorit mit Säure in einem Reaktor in wässriger Lösung umgesetzt wird und
- das gebildete, gasförmige Chlordioxid mit Hilfe einer Vakuumpumpe aus dem Reaktor entnommen wird,
wobei der Reaktor durch mindestens zwei aus einem porösen Material bestehende Trennwände in mindestens drei Reaktorkammern zur Umsetzung von Chlorit mit Säure unterteilt ist, wobei Chlorit und Säure als Ausgangsstoffe in eine erste Reaktorkammer eingeleitet werden, in die letzte Reaktorkammer Gas zugeführt wird und aus der ersten Reaktorkammer das gebildete, gasförmige Chlordioxid in einem Gemisch mit dem zugeführten Gas entnommen wird.

Das poröse Material kann aus verschiedenen Stoffen wie z.B. Glas, Keramik, (synthetischen und halbsynthetischen) Kunststoffen, Metallen, Kompositwerkstoffen usw. hergestellt werden. In Rahmen der vorliegenden Erfindung stellt das poröse Material vorzugsweise eine Fritte, insbesondere eine Glasfritte dar. In einer weiteren bevorzugten Ausführungsform ist das poröse Material eine Kunststoffmembran, vorzugsweise aus Tetrafluorethylen.

Der gewünschte technische Effekt wird unter Verwendung des erfindungsgemäßen Reaktors erzielt, der sich von allen bisher bekannten Reaktoren zur Herstellung von Chlordioxid dadurch unterscheidet, dass er nach dem Gegenstromprinzip arbeitet und nicht nur eine, sondern drei oder mehr Reaktorkammern zur Umsetzung von Chlorit mit Säure aufweist, die durch zwei bzw. mehr poröse Trennwände voneinander getrennt sind, so dass mindestens drei Reaktorkammern gebildet sind. In jeder der Reaktorkammern liegt bei der Durchführung der Umsetzung eine flüssige Phase und eine Gasphase vor.

In einer ersten bevorzugten Ausführungsform handelt es sich um horizontal angeordenete Trennwände, bevorzugt um Fritte(n), insbesondere Glasfritte(n). Die erste Reaktorkammer ist in diesem Fall die oberste, die letzte die unterste. Die flüssige Phase kann aufgrund der Schwerkraft durch die Fritte(n) in den oder die jeweils darunter liegenden Reaktorkammer(n) tropfen bzw. rieseln. Ein Verdünnungsgas wird in die unterste Reaktorkammer zugeführt. Dieses Verdünnungsgas nimmt aus der untersten und den darüber liegenden Reaktorkammern Chlordioxid mit und verdünnt in der obersten Reaktorkammer das neu gebildete gasförmige Chlordioxid sofort. Somit wird die Gasphase von dem gebildeten Chlordioxid und dem in der untersten Reaktorkammer eingeführten Gas gebildet und mit Hilfe des Vakuums aus der obersten Reaktorkammer entnommen.

In einer weiteren bevorzugten Ausführungsform werden mindestens zwei Reaktorkammern nebeneinander angeordnet. Beispielsweise können die Reaktorkammern von Waschflaschen gebildet werden, die durch Leitungen fluidisch verbunden sind. Der Transport der Reaktionslösung erfolgt in diesem Fall diskontinuierlich. Sobald das Vakuum zur Entleerung der letzten Reaktionskammer aufgehoben wird, strömt die Flüssigkeit aus der jeweils davor liegenden Kammer nach, die erste Kammer wird entleert bzw. der Flüssigkeitsstand in ihr vermindert. Auch bei dieser Ausführungsform liegt während der Umsetzung in jeder Reaktorkammer eine flüssige und eine Gasphase vor. Es ist möglich, eine Vorrichtung einzusetzen, die sowohl übereinander wie auch nebeneinander angeordenete Reaktorkammern aufweist. Beispielsweise ist es günstig, die erste und eine zweite Reaktorkammer übereinander und daneben eine oder mehrere weitere Reaktorkammern, vorzugsweise Waschflaschen, durch Leitungen verbunden anzuschließen. Dadurch lässt sich eine sehr kompakte und in der Anzahl der Kammern einfach variierbare Bauweise erzielen.

Bei beiden Ausführungsformen sind die porösen Trennwände zwischen den Kammern wichtig, da durch sie eine Vermischung der Reaktionsflüssigkeit verschiedener Kammern während der Zufuhr von Chlorit mit Säure unterbunden wird. Nur dadurch lässt sich eine vollständige oder zumindest weitgehende Umsetzung der Edukte und Austragung des Chlordioxid errreichen.

Die entnommene Gasphase wird entweder (Variante (a)) mittels einer geeigneten Vorrichtung wie z.B. einer Fritte oder ähnlichem in einen separaten Behälter in frisches Wasser überführt oder (Variante (b)) direkt mit Hilfe einer Wasserstrahlpumpe in Wasser eingemischt. Die gebildete Lösung kann in beiden Fällen in einem Vorratsbehälter gelagert oder direkt einem zu behandelnden Produkt zugeführt werden.

Die Vakuumpumpe ist über eine Leitung entweder
- bei Variante (a) mit dem weiteren Behälter, der wiederum mit einer Leitung mit der ersten bzw. obersten Reaktorkammer verbunden ist, oder
- bei Variante (b) direkt mit der ersten bzw. obersten Reaktorkammer verbunden, so dass das über die Gaszufuhr zugeführte Gas zusammen mit dem Chlordioxid aus der ersten bzw. obersten Reaktorkammer bei Variante (a) über mehrere Leitungen in den weiteren Behälter in frisches Wasser überführt wird oder bei Variante (b) über eine Leitung direkt in dem Antriebswasser der in diesem Fall als Wasserstrahlpumpe ausgeführten Vakuumpumpe gelöst wird.

In die erste bzw. oberste Reaktorkammer werden die notwendigen Ausgangsmaterialien eindosiert, die weitgehend in dieser Kammer zu Chlordioxid reagieren. Die Chlordioxidbildung ist an einer je nach Konzentration der Ausgangsrohstoffe intensiven grüngelben bis gelbbraunen Farbe erkennbar. Wie weit die Umsetzung geht, hängt davon ab, wie konzentirert die Ausgangsstoffe sind und über welche Zeit die Dosierung erfolgt. Typischerweise werden etwa 75 % der Edukte sehr rasch umgesetzt, die restlichen 25 % erst nach Übergang in die weiteren Reaktorkammern.

Besonders vorteilhaft ist, dass die Ausgangsmaterialien mit Hilfe des Vakuums der oben beschriebenen Vakuumpumpe (s. [0021]) in die erste bzw. oberste Reaktorkammer angesaugt werden. Solange das Vakuum in der ersten bzw. obersten Reaktorkammer anliegt, strömen die Ausgangsmaterialien durch die Durchflussbegrenzungsmittel, vorzugsweise Kapillaren, in diese erste bzw. oberste Reaktorkammer. D.h. die erfindungsgemäße Vorrichtung saugt die Ausgangsmaterialien an und entfernt das gebildete Chlordioxid-Gas-Gemisch direkt während der Umsetzung der Edukte. Dies ermöglicht den Betrieb mit konzentrierten Rohstoffen ohne Bildung einer explosionsgefährlichen Konzentration von Chlordioxid.

In die letzte bzw. unterste Reaktorkammer wird das Gas zugeführt. Dieses Gas strömt bzw. steigt durch die aus einem porösen Material bestehende(n) Trennwand/-wände, die vorzugsweise Fritte(n) oder Kunststoffmembranen sind, die jeweils einen abgetrennten Reaktionsraum bilden, in Richtung der ersten Reaktorkammer und nimmt dabei aus den Lösungen das Chlordioxid auf. Aus der ersten bzw. obersten Reaktorkammer wird das Gas zusammen mit dem Chlordioxid mit Hilfe der Vakuumpumpe abgesaugt.

Die flüssige Phase der Reaktionslösung wird im Reaktor auf dem Weg zum Austrag bzw. nach unten durch die Reaktorkammern wegen der geringer werdenden Konzentration an Chlordioxid immer heller. Man verwendet vorteilhafterweise so viele Reaktorkammern, dass in der letzten bzw. untersten Reaktorkammer die flüssige Phase farblos ist.

Unterhalb eines Gehalts von ca. 5 - 10 ppm Chlordioxid ist die Lösung farblos und enthält bei Verwendung der Ausgangsmaterialien Natriumchlorit und Salzsäure nur noch stark verdünnte Salzsäure und Natriumchlorid, letzteres aus der Neutralisation des alkalischen Natriumchlorits mit Salzsäure. Diese können dann entsorgt werden.

Das Verfahren erlaubt somit eine komplette Trennung des Chlordioxids von den im Trinkwasser unerwünschten Resten an Salzsäure und Natriumchlorit sowie dem Reaktionsprodukt Natriumchlorid.

Der Betrieb der erfindungsgemäßen Vorrichtung erfolgt chargenweise. Die flüssige Phase wird von mindestens einer oder mehreren aus einem porösen Material bestehenden Trennwand und dem Gas in der jeweiligen Reaktorkammer gehalten, bis die Umsetzung beendet wird. Dann wird das Vakuum unterbrochen, z.B. durch eine Falschluftzufuhr in der ersten bzw. obersten Reaktorkammer, und die flüssige Phase aus der letzten bzw. untersten Reaktorkammer abgeleitet. Die flüssigen Phasen aus der(den) davor bzw. darüber liegenden Reaktorkammer(n) strömt(strömen) dabei nach, die erste bzw. oberste Reaktorkammer wird entleert bzw. das Volumen der flüssigen Phase in ihr vermindert. Dann wird erneut das Vakuum angelegt und die Dosierung der Ausgangsstoffe sowie die Gaszufuhr gestartet. Auf diese Weise wird innerhalb sehr kurzer Zeiten je Einzelumsetzung insgesamt eine vollständige Umsetzung der Edukte ermöglicht und eine sehr weitgehende Austreibung des Chlordioxid erreicht, da die flüssige Phase nach der Umsetzung in der ersten bzw. obersten Reaktorkammer den Reaktor nicht verlässt sondern in die danach bzw. darunter liegende Reaktorkammer gelangt. Dort vervollständigt sich während der Umsetzung der nächsten Charge Edukte die Umsetzung. Durch das im Gegenstrom geführte Gas wird stets die Lösung, in der sich am wenigsten Chlordioxid befindet, mit frischem Gas beschickt, welches auch die geringen Konzentrationen Chlordioxid gut austreibt.

Durch die Parallelschaltung eines zweiten Reaktors oder mehrerer weiterer Reaktoren kann eine kontinuierliche Produktion ermöglicht werden. Dadurch kann auch die Menge des Produkts erhöht werden.

Das erfindungsgemäße Verfahren und die Vorrichtung ermöglichen durch das Verdünnen mit dem eingeleiteten Gas, den sofortigen Abzug des gebildeten Chlordioxides durch das Vakuum und die umgehende Einkondensation in Wasser die Verwendung von konzentrierten Rohstoffen ohne eine Erhöhung des Sicherheitsrisikos.

Der Reaktor ist vorteilhafter Weise durch 2 bis 10 oder noch mehr Trennwände aus porösem Material in 3 bis 11 Reaktorkammern unterteilt, bevorzugt in 3 bis 6 Reaktorkammern. Die Anzahl hängt von der Konzentration der Edukte, der Betriebsdauer für eine Charge und der Menge an zugeführtem Gas sowie dem Vakuum ab. Wie bereits erwähnt werden vorzugsweise so viele Kammern vorgesehen, dass die flüssige Phase in der letzten bzw. untersten Kammer farblos und damit die Konzentration an Chlordioxid in dieser Kammer kleiner als 10 ppm ist.

Die Durchströmung des Reaktors erfolgt in der ersten bevorzugten Ausführungsform mit Hilfe der Schwerkraft, die Reaktionslösung wird bei Unterbrechung des Vakuum und des Gastromes durch die Schwerkraft nach unten befördert. In der zweiten bevorzugten Ausführungsform erfolgt die Durchströmung mit Hilfe des Vakuums und des Gasstroms. Durch die Zusammenwirkung von Vakuum und Gasstrom werden die flüssigen Phasen in der jeweiligen Reaktorkammer gehalten, bis eine Belüftung erfolgt. Durch den dann ansteigenden Druck in der ersten Reaktorkammer strömt die Flüssigkeit in die nächste Reaktorkammer usw. während die Flüssigkeit aus der letzten Reaktorkammer - zumindest teilweise - abgeleitet wird.

Zum Einleiten von Chlorit und Säure als Ausgangsstoffe in die erste bzw. oberste Reaktorkammer werden Leitungen mit Durchflussbegrenzungsmitteln, insbesondere Kapillaren, die vorzugsweise einen Innendurchmesser kleiner 3 mm haben, in Kombination mit dem Vakuum der Vakuumpumpe, durch welches die Edukte angesaugt werden, verwendet. Dadurch wird verhindert, dass bei einem Vakuumausfall die Edukte weiter in den Reaktor dosiert werden, was sehr rasch zur Bildung einer explosiven Konzentration von Chlordioxid führen würde. Die Durchlassmenge der Durchflussbegrenzungsmittel, z.B. die Kapillarendurchmesser, werden auf das verwendete Vakuum abgestimmt, so dass die Edukte in der gewünschten Geschwindigkeit, typischerweise von einigen ml/min bis hin zu einigen hundert ml/min - je nach Konzentration -, in die erste bzw. oberste Kammer gelangen.

Die Umsetzung von Natriumchlorit und Salzsäure zu Chlordioxid, Natriumchlorid und Wasser erfolgt in den Reaktionslösungen, die sich vor bzw. oberhalb der aus einem porösen Material bestehenden Trennwand/-wände befinden. Das Chlordioxid wird je nach Konzentration der verwendeten Ausgangsstoffe in einer Reaktionszeit im Bereich von 0,1 bis 20 Minuten gebildet.

Das gebildete Chlordioxid liegt teilweise in der Lösung vor, teilweise tritt es in die Gasphase über der Reaktionslösung über, d.h. in den Dampfraum der Reaktorkammer.

Das Gas, das über eine Leitung in den unteren Teil in der austragsseitig letzten Reaktorkammer bzw. der untersten Reaktorkammer einströmt, vermischt sich mit dem Chlordioxid aus der letzten bzw. unteren Reaktorkammer und wird über die aus einem porösen Material bestehenden Trennwände in Richtung auf die erste Reaktorkammer hin bzw. nach oben, in die davor bzw. darüber liegende Reaktorkammer bis in die erste bzw. oberste Reaktorkammer unter Mitnahme von noch in der flüssigen Phase gelöstem Chlordioxid geleitet.

Oben aus dem Dampfraum der obersten Reaktorkammer wird das Gas zusammen mit dem Chlordioxid mit Hilfe der Vakuumpumpe, die über eine Leitung entweder
(a) mit dem weiteren Behälter
   oder
(b) mit der obersten Reaktorkammer
verbunden ist, entnommen. Dabei wird im Falle (a) in dem Behälter ein geringerer Druck als in dem Reaktor erzeugt und über die Gaszufuhr zugeführtes Gas zusammen mit dem Chlordioxid über eine weitere Leitung aus der ersten bzw. obersten Reaktorkammer in den weiteren Behälter überführt, oder im Falle (b) wird über die Gaszufuhr zugeführtes Gas zusammen mit dem Chlordioxid über die Leitung aus der ersten bzw. obersten Reaktorkammer direkt im Antriebswasser der in diesem Fall als Pumpe verwendeten Wasserstrahlpumpe gelöst und in einem Vorratsbehälter gelagert. Die Lösung ist zur Verwendung aus dem weiteren Behälter oder dem Vorratsbehälter entnehmbar. Im Fall (a) ist auch die direkte Verwendung des Gasgemisches möglich, wobei sich dann in dem weiteren Behälter das zu behandelnde Produkt befindet.

Die Vorrichtung umfasst im Falle (a) eine Leitung zwischen erster bzw. oberster Reaktorkammer und dem weiteren Behälter, deren Ende in dem weiteren Behälter sich unterhalb des Wasserspiegels in diesem Behälter befindet. Eine weitere Leitung verbindet den Gasraum oberhalb des Wasserspiegels in dem weiteren Behälter mit der Vakuumpumpe, vorteilhafterweise eine Wasserstrahlpumpe. Liegt nun durch die Vakuumpumpe in dem Gasraum des weiteren Behälters ein geringerer Druck als in dem Reaktor vor, so wird das Gas/Chlordioxidgemisch aus dem Gasraum der ersten bzw. obersten Reaktorkammer abgeführt und in das Wasser in dem weiteren Behälter gesaugt. Das Chlordioxid löst sich in diesem Wasser und das Gas wird aus dem Gasraum abgesaugt. Da während der Umsetzung aus dem weiteren Behälter keine Lösung entnommen werden kann, wird die Lösung vorzugsweise aus dem Behälter in einen Vorratsbehälter umgefüllt.

Im Falle (b) und der Verwendung einer Wasserstrahlpumpe lässt sich Chlordioxid in dem für den Betrieb der Wasserstrahlpumpe notwendigen Wasser lösen, wodurch der weitere Behälter entfällt. Das im Wasser gelöste Chlordioxid kann über eine Leitung entweder einem zu behandelnden Produkt, beispielsweise einem Trinkwasservorratsbehälter, zudosiert werden oder in einen Vorratsbehälter überführt werden, aus dem eine oder mehrere Dosierpumpen in verschiedene Anwendungsbereiche wie Trinkwasser und Brauchwasser dosiert werden können.

Die Reaktion von Natriumchlorit und Salzsäure zu Chlordioxid wird beim seitherigen Verfahren durch einen ca. 8-fachen Überschuss an Salzsäure katalysiert, um eine genügend schnelle Reaktion innerhalb von ca. 20 Minuten zu erzielen. Durch den ständigen Entzug von Chlordioxid aus der Reaktionslösung bei dem erfindungsgemäßen Verfahren *verschiebt* sich das *Gleichgewicht der Umsetzung* auf die Seite des gasförmigen Produkts. Der Säureüberschuss kann deutlich reduziert werden, ohne längere Umsetzungszeiten oder geringere Umsätze, was eine Einsparung von Säure bis zu 60 % ermöglicht.

Gleichzeitig verschlechtert der hohe Salzgehalt der Reaktorlösung die Löslichkeit von Chlordioxid in Wasser und dieses wird dadurch schneller in die Gasphase überführt und ist leicht per Vakuum absaugbar. Auf diese Weise kann die Reaktion vollständig in die gewünschte Richtung verlaufen.

Als Säure wird Salzsäure bevorzugt, jedoch kann auch jede andere Säure verwendet werden, also auch andere chlordioxidstabile Säuren, wie beispielsweise Essigsäure etc., und andere Mineralsäuren, wie beispielsweise Schwefelsäure, hypochlorige Säure, etc. Auch Mischungen dieser Säuren sind einsetzbar. Weiterhin sind auch solche Substanzen als Säure geeignet, die die Säure erst in wässriger Lösung freisetzen, wie beispielsweise Peroxodisulfate, insbesondere Natrium- oder Kaliumperoxodisulfat. Unter dem Begriff Säure sind daher im Rahmen der vorliegenden Erfindung auch säurebildende Substanzen wie die Peroxodisulfate zu verstehen.

Als Chlorit werden Alkali- und Erdalkalichlorite bevorzugt, ganz besonders wird Natriumchlorit bevorzugt. Es sind jedoch alle Chlorite einsetzbar, beispielsweise Kaliumchlorit, Calciumchlorit usw. Der Einfachheit halber werden die folgenden Erläuterungen anhand von Natriumchlorit vorgenommen, wobei es sich jedoch versteht, dass auch jedes andere Chlorit oder Gemische von Chloriten verwendet werden können. Naturgemäß entstehen bei einem Einsatz anderer Chlorite als Natriumchlorit die entsprechenden Chloride der anderen Kationen anstelle von Natriumchlorid.

Das verwendete Gas kann Umgebungsluft sein, aber auch andere Gase wie Kohlendioxid, Stickstoff oder sonstige chlordioxidstabile Gase. Darüber hinaus können gasbildende Salze wie Bicarbonate als Verdünnungsmittel verwendet werden.

Besonders bevorzugt wird die Kombination einer Wasserstrahlpumpe mit einer Beimengung von Luft als Gas.

Erfindungsgemäß erlaubt die Aufteilung des Reaktors durch die aus einem porösen Material bestehenden Trennwände einen hohen Umsatz, wobei das ClO₂ keine zu hohe (sicherheitsgefährdende) Konzentration im Reaktor erreicht. Außerdem wird eine sichere Zudosierung der Ausgangsstoffe sowie eine starke Verschiebung des Reaktionsgleichgewichtes in Richtung Chlordioxid erzielt.

Darüber hinaus weist das gemäß der vorliegenden Erfindung aus dem Reaktor ausgetragene Gasgemisch gegenüber dem bisherigen Stand der Technik eine vergleichbar konstante Konzentration an Chlordioxid auf.

Außerdem kann durch die vorliegende Erfindung die Ausbeute im Vergleich zum aus DE 10 2010 011 699 bekannten Reaktor erhöht werden. Um die gleiche Menge an Chlordioxid zu erhalten, müsste das bekannte Verfahren deutlich länger durchgeführt werden, wobei verdünntere Lösungen erhalten werden.

Das Chlordioxid wird in der Regel wieder in Wasser gelöst, wobei dazu frisches Wasser verwendet wird. Frisches Wasser bedeutet hier, dass das Wasser nicht Ausgangs- oder Nebenprodukte der Herstellung des Chlordioxids enthält. Die aus dem Reaktionsbereich abgezogene Säure/Salz-Mischung kann zum Teil auch als saure Reaktionskomponente für den Prozess der Chlordioxidherstellung im Reaktor wieder eingesetzt werden, solange der dann steigende Natriumchloridgehalt die Reaktion nicht stört und der pH-Wert der Reaktionslösung genügend niedrig liegt, um Chlordioxid genügend rasch zu bilden.

Das in dem weiteren Behälter oder dem Ablauf der Wasserstrahlpumpe entstehende Chlordioxid-Konzentrat kann mittels einer Dosiereinheit z. B. einem zu behandelnden Wasser direkt zugeführt werden. Die Dosierung der Chlordioxid-Lösung erfolgt dabei in an sich bekannter Weise. Es ist auch möglich, aber in der Regel vor allem wegen der Explosionsgefahr höher konzentrierten Chlordioxids weniger bevorzugt, das gasförmige Chlordioxid nach der Überführung direkt dem zu behandelnden Produkt zuzufügen bzw. zuzudosieren. In diesem Fall enthält der weitere Behälter das zu behandelnde Produkt, wie z. B. Trinkwasser. Es kann sich bei dem weiteren Behälter somit auch um eine Leitung handeln.

Die verbrauchte Reaktionslösung wird aus der letzten bzw. untersten Reaktorkammer über eine Leitung entnommen. In der Leitung zum Abführen erschöpfter Reaktionslösung kann ein Ventil zum Ablassen der Lösung in einen Behälter oder eine Dosierpumpe oder eine Pumpe mit Minimumsensor (zur Niveauregulierung im Reaktor) zum Abpumpen der Lösung vorgesehen sein.

Zum Abführen der verbrauchten Reaktionslösung bei gleichzeitiger Niveauregulierung im Reaktor kann für die Ausführungsform mit vertikaler Anordnung der Reaktorkammern die Abführ-Leitung auch mit dem Reaktor zusammen ein System kommunizierender Rohre bilden. Hierbei wird, sobald das Vakuum nicht mehr anliegt und die Gaszufuhr unterbrochen ist, die Reaktionslösung aus der untersten Reaktorkammer abgesaugt, bis in der Abführ-Leitung das Niveau ebenso hoch steht wie im Reaktor.

Weitere Verbesserungen des Verfahrens bestehen darin, dass im Falle (a) das Antriebswasser der Wasserstrahlpumpe mit Hilfe einer Pumpe im Kreis gefahren werden kann. Oder es wird als "Frischwasser" für den weiteren Behälter genutzt, wobei die Wasserstrahlpumpe mit frischem Wasser betrieben wird. Sowohl die Wasserstrahlpumpe als auch der Behälter kann mit einer Leitung für die Zufuhr von frischem Wasser verbunden sein. Zweckmäßig ist der Wassereingang der Wasserstrahlpumpe und die Leitung zum Befüllen des Behälters mit frischem Wasser jeweils mit einem Ventil ausgerüstet.

Die erste Reaktorkammer bzw. der obere Teil des Reaktors kann gegebenenfalls mit einer Einrichtung zur Falschluftsteuerung oder einer Einrichtung für die Luftzufuhr ausgerüstet sein. Als diese Einrichtung können z.B. eine Kapillare oder jedes andere dem Fachmann für diesen Zweck bekannte System verwendet werden. Die Falschluftsteuerung kann dazu benutzt werden, das Vakuum im Reaktor zu steuern bzw. das Vakuum zur Entnahme der sauren, verbrauchten Reaktionslösung abzubauen. Außerdem kann je nach Umgebungstemperatur der Reaktor oder ein oder mehrere Reaktorkammern temperiert werden. Beispielsweise ist bei erhöhten Umgebungstemepraturen, z.B. oberhalb 35 °C, eine Kühlung des Reaktors zweckmäßig, zumindest eine Kühlung der ersten oder der ersten beiden Reaktorkammern.

Durch die vorliegende Erfindung gelangen keine unerwünschten Ausgangs- oder Nebenprodukte wie Chlorit in das zu behandelnde Produkt, z. B. in das Trinkwasser. Die Chlordioxidlösung ist praktisch salzfrei und kann zu Desinfektionszwecken, Bleichzwecken und zur Konservierung verwendet werden. Laut DVGW Arbeitsblatt W ist bei der Trinkwasserdesinfektion derzeit die Verwendung von Salzsäure und Natriumchlorit vorgeschrieben. Beim erfindungsgemäßen Verfahren könnten auch andere Säuren als Salzsäure verwendet werden, ohne die Trinkwassereigenschaften zu verändern.

Es ist weiterhin möglich, der erfindungsgemäßen Chlordioxidlösung in einer an sich bekannten Weise Tenside, Netzmittel, Reinigungsverstärker, Härtestabilisatoren, Korrosionsinhibitoren, Schaumbildner, Parfüm und/oder Farbstoffe zuzufügen. Diese Substanzen können in den üblichen Mengen zugesetzt werden.

Die Erfindung soll anhand der beigefügten Figuren, welche schematisch verschiedene Beispiele für die Ausgestaltung der erfindungsgemäßen Vorrichtung und des erfindungsgemäßen Verfahrens zeigen, näher erläutert werden, ohne jedoch auf die konkret beschriebenen Ausführungsformen beschränkt zu sein. Es zeigen:
Figur 1 eine erste, nicht erfindungsgemäße Ausführungsform mit vertikaler Reaktorkammeranordnung,
Figur 2 eine zweite erfindungsgemäße Ausführungsform mit vertikaler Reaktorkammeranordnung,
Figur 3 eine dritte erfindungsgemäße Ausführungsform mit vertikaler Reaktorkammeranordnung
und Figur 4 eine vierte erfindungsgemäße Ausführungsform mit einer Kombination aus vertikaler und horizontaler Reaktorkammeranordnung.

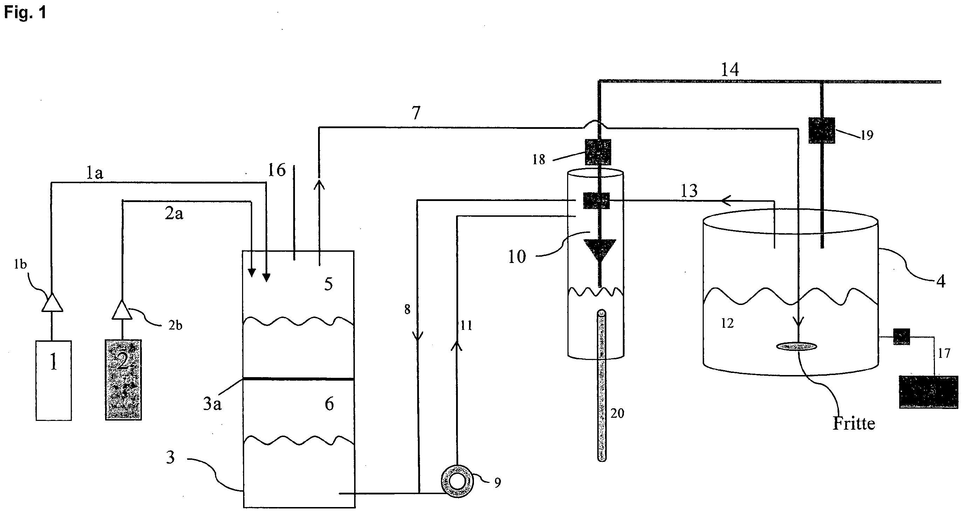

In Fig. 1 ist eine nicht erfindungsgemäße Vorrichtung schematisch dargestellt. Mit 1 und 2 sind die Vorratsbehälter für die Ausgangsstoffe Natriumchlorit und Salzsäure bezeichnet. Über die Leitungen 1a und 2a werden die Ausgangsstoffe dem obersten Zwischenbehälter 5 zugeführt. Die Zufuhr erfolgt diskontinuierlich durch Leitungen 1a und 2a, die mit unabhängigen Dosierventilen (1b und 2b) als Durchflussbegrenzungsmittel ausgerüstet sind, mit Hilfe das Vakuums der Wasserstrahlpumpe 10.

In der obersten Reaktorkammer 5 befindet sich die Reaktionslösung im unteren Bereich und die Gasphase im oberen Bereich. Es können auch geeignete Rührvorrichtungen vorgesehen werden, typischerweise reicht aber die durch das zugeführte Gas erfolgende Durchmischung völlig aus. Nach Unterbrechung von Vakuum und Gaszufuhr rieselt / tropft die Reaktionslösung durch die aus einem porösen Material bestehende Trennwand 3a in die unterste Reaktorkammer 6.

Die Umsetzung von Natriumchlorit und Salzsäure zu Chlordioxid, Natriumchlorid und Wasser erfolgt in den Reaktionslösungen der Reaktorkammern 5 und 6. Das gebildete Chlordioxid liegt dann teilweise in der Lösung vor, teilweise tritt es in die Gasphase über der Reaktionslösung über.

Ein Gasstrom, beispielsweise Luft, CO₂ oder Stickstoff, als Mittel für die Überführung des Chlordioxids wird über die Leitung 8 der Reaktorkammer 6 des Reaktors 3 zugeführt. Der Gastrom tritt zusammen mit dem in der Reaktorkammer 6 gebildeten Chlordioxid durch die Trennwand 3a nach oben in die Reaktorkammer 5, wo sich auch das dort gebildete Chlordioxid mit dem Gas vermischt. Das gebildete Chlordioxid und das zugeführte Gas werden von dort über die Leitung 7 in den weiteren Behälter 4 befördert.

Im weiteren Behälter 4 befindet sich frisches Wasser 12, das beispielsweise über eine Zuführungsleitung 14, ggf. mit Ventil 19 eingefüllt werden kann. Das in den Behälter 4 gesaugte Chlordioxid löst sich in dem Wasser 12 und kann über die Leitung 17 einem zu behandelnden Produkt 15, beispielsweise einem Trinkwasservorratsbehälter, zudosiert werden. Das zugeführte Gas trennt sich dabei von dem Chlordioxid und gelangt in den Gasraum oberhalb des frischen Wassers 12.

Über die Leitung 11 wird die verbrauchte Reaktionslösung aus dem Reaktor 3 abgeführt. Die Leitung 11 ist zweckmäßig mit einer Pumpe 9 und gegebenenfalls mit einem Ventil versehen, über welche der Abfluss von Reaktionslösung geregelt bzw. gestartet und gestoppt werden kann.

Das Antriebswasser der Wasserstrahlpumpe 10 kann auch (nicht dargestellt) mit Hilfe einer Pumpe im Kreis gefahren werden. Alternativ kann es als "Frischwasser" dem Behälter 4 zugeführt werden. Die Wasserstrahlpumpe 10 wird dann mit frischem Wasser betrieben.

Das frische Wasser kann über die Zuführungsleitung 14, die mit einem Ventil 18 ausgerüstet ist, der Wasserstrahlpumpe 10 kontinuierlich zugeführt werden. Zur Vermeidung von Schwankungen des Vakuums sollten größere Schwankungen des Wasserdrucks verhindert werden.

Die Wasserstrahlpumpe 10 ist über die Leitung 13 mit dem Behälter 4 verbunden. Somit wird durch das Vakuum der Wasserstrahlpumpe 10 das mit ClO₂ gemischte Gas über die Leitung 7 in den Behälter 4 gesaugt.

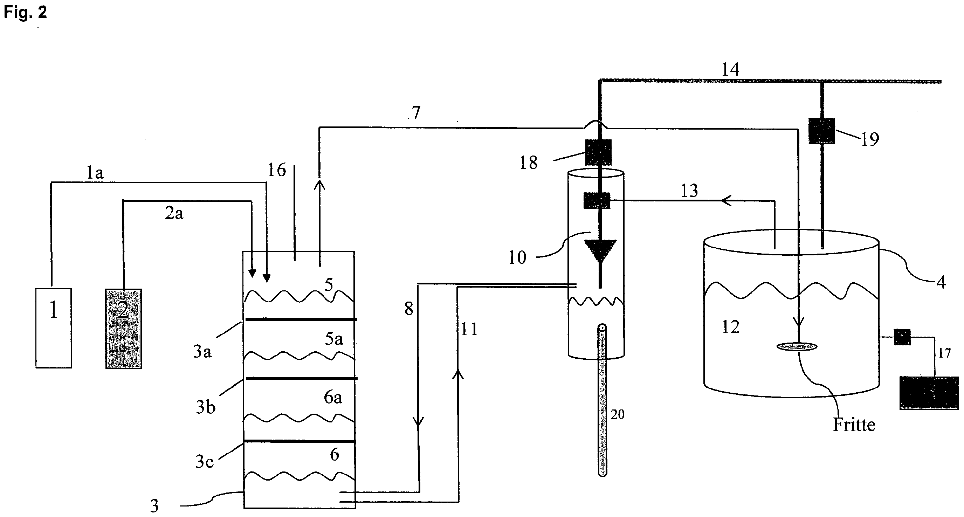

In Figur 2 ist eine erfindungsgemäße Vorrichtung gezeigt, bei der die Leitung für die Abfuhr der Reaktionslösung mit dem Reaktor ein System kommunizierender Rohre bildet, so dass auf Pumpen zur Abfuhr der Reaktionslösung verzichtet werden kann. In diesem Beispiel verfügt der Reaktor über drei poröse Trennwände 3a, 3b und 3c, so dass vier Reaktorkammern gebildet werden, neben der obersten Reaktorkammer 5 und der untersten Reaktorkammer 6 noch die Reaktorkammern 5a und 6a. Gleiche Bauteile sind mit denselben Bezugszeichen wie bei der Vorrichtung in Figur 1 bezeichnet und werden nicht nochmals im Detail erläutert.

Bei der Vorrichtung in Figur 2 erfolgt die Dosierung der Edukte 1 und 2 mit Hilfe des Vakuums der Wasserstrahlpumpe 10. Die Leitungen 1a und 2a sind dazu als Kapillaren ausgebildet. Solange Vakuum in der Reaktorkammer 5 anliegt, strömen die Edukte durch die Kapillaren in die Reaktorkammer 5. Wird das Vakuum unterbrochen, stoppt die Dosierung, was einen hohen Sicherheitsgewinn bedeutet. Mit Unterbrechung des Vakuums wird die Reaktionslösung aus der Reaktorkammer 6 in die Leitung 11 gesaugt, bis das Niveau in Reaktor 3 und Leitung 11 gleich ist. Durch die Höhe der Leitung 11 kann somit gesteuert werden, ob die Reaktorkammer 5 entleert oder nur der Pegel der Reaktionslösung darin vermindert wird.

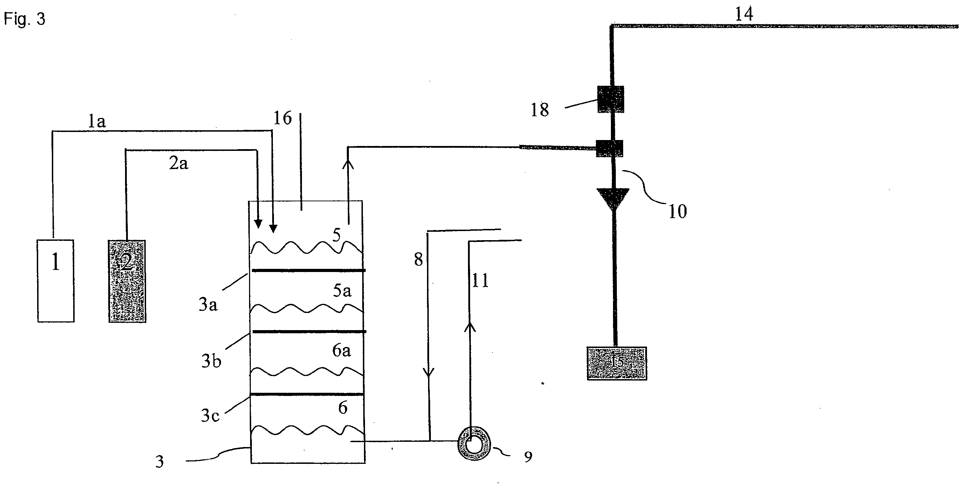

In Figur 3 ist eine erfindungsgemäße Vorrichtung gezeigt, bei der die gebildete Gasphase über die Leitung 13 aus der obersten Reaktorkammer 5 des Reaktors 3 entnommen und direkt im Antriebswasser der Wasserstrahlpumpe 10 gelöst wird. Die Lösung wird in einem Vorratsbehälter 15 gelagert. Auch hier erfolgt die Niveausteuerung über die als kommunizierende Rohre ausgeführte Leitung 11 und Reaktor 3. Gleiche Bauteile sind mit denselben Bezugszeichen wie bei der Vorrichtung in Figur 1 und 2 bezeichnet und werden nicht nochmals im Detail erläutert.

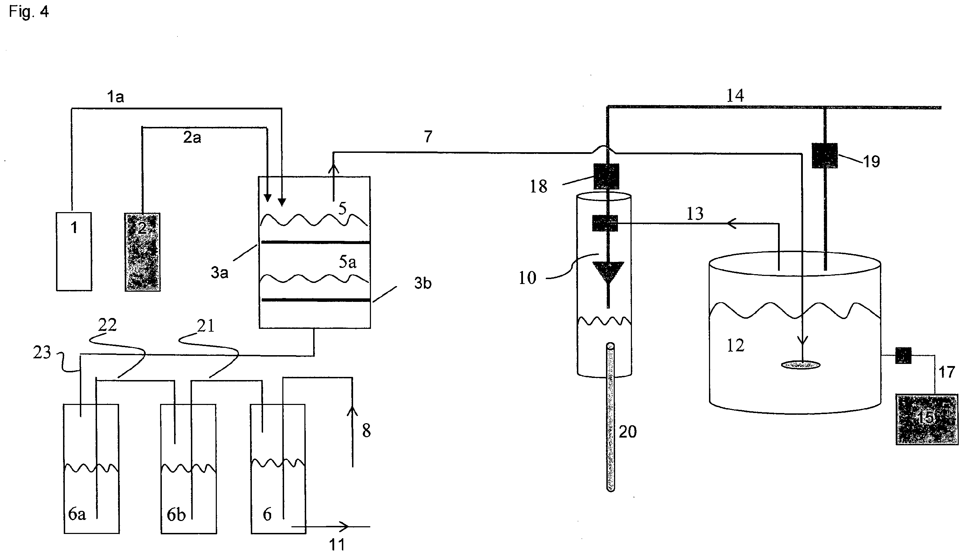

Gemäß Figur 4 weist der Reaktor zwei vertikal angeordnete Reaktorkammern 5 und 5a auf, sowie drei weitere, horizontal angeordnete Reaktorkammern 6a, 6b und 6, welche von Waschflaschen gebildet werden. Der vertikale Reaktorteil wird von einem Glasrohr mit Glasfritten gebildet und ist ebenso wie die Zufuhr der Edukte, etc. analog zu den in Figuren 2 und 3 beschriebenen Reaktoren aufgebaut. Dieser Teil wird daher nicht nochmals erläutert.

Der horizontale Teil des Reaktors ist über die Leitung 23 mit dem vertikalen Teil, d.h. die Reaktorkammer 6a mit der Reaktorkammer 5a, verbunden. Die Leitung 22 verbindet die Kammer 6a mit der Kammer 6b und die Leitung 21 verbindet die Kammer 6b mit der letzten Reaktorkammer 6. In den unteren Bereich der letzten Reaktorkammer 6 mündet die Gaszufuhr 8. Die Gaszufuhr 8 weist an ihrem Eingang in die Kammer 6 eine poröse Membran aus Tetrafluorethylen auf, ebenso die Leitungen 21 und 22 an ihren Eingängen in die Kammern 6a und 6b. Das Gas wird so in den jeweiligen flüssigen Phasen gut verteilt und überführt gelöstes Chlordioxid sehr wirksam in die jeweilige Gasphase. Über die Leitung 23 gelangt das Gas mit dem Chlordioxid durch die Glasfritte 3b, welche den Boden der untersten Reaktorkammer 5a des vertikalen Reaktorteils bildet, in diese.

Ein Vorteil des Reaktors von Figur 4 liegt darin, dass die Bauhöhe unter Erhalt der Anzahl an Reaktorkammern erheblich reduziert werden kann. Da die Anzahl Reaktorkammern neben der Umsetzungszeit darüber entscheidet, wie vollständig die Reaktion von Chlorit mit Säure abläuft und wie vollständig das Chlordioxiod ausgetragen wird, wäre ein Reduktion der Kammeranzahl nicht erwünscht.

Ein weiterer Vorteil ist, dass die Anzahl der Reaktorkammern einfacher verändert werden kann. Der vertikale Glasreaktor kann praktisch nur durch Austausch mit mehr oder weniger Reaktorkammern ausgerüstet werden. Weitere Waschflaschen können über weitere Leitungen schnell und einfach angeschlossen werden. Eine Entfernung ist ebenso schnell und einfach möglich.

Die Erfindung bezieht sich auch auf alle Kombinationen von bevorzugten Merkmalen, soweit sich diese nicht gegenseitig ausschließen.

### Beispiel 1

Das folgende Beispiel 1 zeigt die Wirkung der Erfindung. Zur Erzeugung von Chlordioxid wurde eine Vorrichtung mit 5 Kammern verwendet, wie in Figur 3 gezeigt. Die Reaktion wurde diskontinuierlich durchgeführt. Es wurden jeweils eine 25 %-ige wässrige Lösung von Natriumchlorit durch die Leitung 1a, die eine Kapillare mit einem Durchmesser von 0,75 mm war, und 33 %-ige Salzsäure durch die Leitung 2a, die eine Kapillare mit einem Durchmesser von 0,5 mm war, oben in den Reaktor 3 eingefüllt. Dem Reaktor wurde unten ein Luftstrom zugeführt. Mit der Wasserstrahlpumpe wurde ein Vakuum, ausgedrückt als Druck relativ zum Außendruck, von -0,2 bis -0,5 bar eingestellt. Die Wasserstrahlpumpe läuft 4-5 Minuten und fördert dabei je nach eingestelltem Unterdruck 15-25 Liter Wasser, in dem das Chlordioxid gelöst ist. Man erhielt in Abhängigkeit vom eingestellten Unterdruck die in Tabelle 1 angegebenen Dosierraten der Edukte und die dort ebenfalls aufgeführte Konzentration an Chlordioxid im aus der Wasserstrahlpumpe 10 strömenden Wasser. Diese Konzentration war über die Umsetzungsdauer stabil.

**Tabelle 1**

| **Druck (bar)** | **Salzsäure, 33 %-ig (ml/min)** | **Natriumchlorit, 25 %-ig (ml/min)** | **Chlordioxid (ppm)** |
|---|---|---|---|
| -0,2 | 7 | 17 | 402 |
| -0,3 | 17 | 38 | 611 |
| -0,4 | 25 | 61 | 1046 |
| -0,5 | 38 | 90 | 1527 |

Die erhaltenen Konzentrationen an Chlordioxid sind für die Trinkwasserbehandlung brauchbar.

### Beispiel 2

Im Vergleichsbeispiel 2 wurden Raschigringe zur Unterteilung des Reaktors verwendet. Eine Säule mit 90 cm Höhe und 3,2 cm Durchmesser als Reaktor wurde mit Wasser und Raschigringen gefüllt und oben auf diese Säule 20 ml einer Lösung mit 20 000 ppm Chlordioxid gegeben.

### Beispiel 3

Im Beispiel 3 wurden 3 Glasfritten als Trennwände zum Trennen des Reaktors verwendet. Die im Beispiel 2 erwähnte Säule wurde ohne Raschigringe mit 3 Fritten unterteilt und analog zu Beispiel 2 die 20 ml Lösung mit 20 000 ppm Chlordioxid hinzugegeben.

Es wurde die Zeit gemessen, bis die Lösung sich am unteren Ende der Säule gelblich verfärbt.
Beispiel 2: 8 min
Beispiel 3: 1 St 45 min.

Wie man aus dem Vergleich der Beispiele 2 und 3 sehen kann, wird mittels der Aufteilung des Reaktors durch die aus einem porösen Material bestehenden Trennwände (Beispiel 3) erzielt, dass sich die Lösung am unteren Ende der Säule deutlich langsamer gelblich verfärbt (fast 2 St) als am unteren Ende der mit Raschigringen befüllten Säule. Die in Beispiel 2 erfolgende schnelle Durchmischung verhindert die vollständige Ausgasung des Chlordioxid aus der Reaktionslösung, auch eine vollständige Umsetzung des Chlorit mit Säure kann (zumindest ohne größeren Säureüberschuss) nicht gewährleistet werden. Dagegen wird erfindungsgemäß bei einer ausreichenden Anzahl Reaktorkammern sowohl eine vollständige Umsetzung als auch eine vollständige Ausgasung des Chlordioxid erreicht.

### Bezugszeichenliste

- 1: Vorratsbehälter für Chlorit
- 2: Vorratsbehälter für Säure
- 1a: Leitung für die Zufuhr von Chlorit
- 2a: Leitung für die Zufuhr von Säure
- 1b: Dosierventil
- 2b: Dosierventil
- 3: Reaktor
- 3a, 3b, 3c: die aus einem porösen Material bestehende Trennwand
- 4: weiterer Behälter
- 5: erste bzw. oberste Reaktorkammer
- 5a: Reaktorkammer
- 6: letzte bzw. unterste Reaktorkammer
- 6a, 6b: Reaktorkammer
- 7: Einrichtung zur Überführung des gebildeten, gasförmigen Chlordioxids
- 8: Leitung für Begasung und Niveausteuerung
- 9: Pumpe
- 10: Wasserstrahlpumpe
- 11: Leitung zur Abfuhr von Reaktionslösung
- 12: frisches Wasser
- 13: Leitung (zum Absaugen des Chlordioxids aus dem Behälter 4)
- 14: Leitung für die Zufuhr von frischem Wasser
- 15: Vorratsbehälter bzw. zu behandelndes Produkt
- 16: Einrichtung zur Steuerung von Falschluft oder für die Luftzufuhr
- 17: Leitung
- 18: Ventil
- 19: Ventil
- 20: Ablauf
- 21, 22, 23: Leitungen zur fluidischen Verbindung

## Patentansprüche

1. Verfahren zur Herstellung von Chlordioxid, bei dem:
- Chlorit mit Säure in einem Reaktor (3) in wässriger Lösung umgesetzt wird und
- das gebildete, gasförmige Chlordioxid mit Hilfe einer Vakuumpumpe (10) aus dem Reaktor (3) entnommen wird,
**dadurch gekennzeichnet, dass** der Reaktor (3) durch mindestens zwei aus einem porösen Material bestehende Trennwände (3a) auf mindestens drei Reaktorkammern (5, 6) zur Umsetzung von Chlorit mit Säure unterteilt ist, Chlorit und Säure als Ausgangsstoffe in der ersten Reaktorkammer (5) jeweils über getrennte Leitungen (1a, 2a) mit Hilfe von Durchflussbegrenzungsmitteln und dem Vakuum der Vakuumpumpe (10) zugeführt werden, in der letzten Reaktorkammer (6) Gas zugeführt wird und aus der ersten Reaktorkammer (5) das gebildete, gasförmige Chlordioxid in einem Gemisch mit dem zugeführten Gas entnommen und in Wasser überführt wird,
wobei die Zufuhr der Ausgangsstoffe diskontinuierlich erfolgt, in jeder der Reaktorkammern bei der Durchführung der Umsetzung eine flüssige Phase und eine Gasphase vorliegt, die flüssige Phase von der Trennwand und dem Gas in der jeweiligen Reaktorkammer gehalten wird, bis die Umsetzung beendet wird, indem das Vakuum unterbrochen und die flüssige Phase aus der untersten Reaktorkammer abgeleitet wird, wobei die flüssigen Phasen aus den davor liegenden Reaktorkammern nachströmen.

2. Verfahren gemäß Anspruch 1, **dadurch gekennzeichnet, dass** die Reaktorkammern vertikal angeordnet sind und die Reaktionslösung den Reaktor (3) aufgrund der Schwerkraft durchströmt.

3. Verfahren gemäß Anspruch 1, **dadurch gekennzeichnet, dass** die Reaktorkammern horizontal, vertikal oder vertikal und horizontal angeordnet sind.

4. Verfahren gemäß Anspruch 1, 2 oder 3, **dadurch gekennzeichnet, dass** als Gas Luft, Kohlendioxid, Stickstoff oder ein anderes chlordioxidstabiles Gas verwendet wird.

5. Verfahren gemäß einem der Ansprüche 1 bis 4, **dadurch gekennzeichnet, dass** als Vakuumpumpe (10) eine Wasserstrahlpumpe verwendet wird, wobei vorzugsweise der Wasserdruck in der Wasserstrahlpumpe konstant gehalten wird.

6. Verfahren gemäß Anspruch 5, **dadurch gekennzeichnet, dass** das gebildete, gasförmige Chlordioxid über eine Leitung (13), die die erste Reaktorkammer (5) mit der Wasserstrahlpumpe (10) verbindet, aus dem Reaktor (3) entnommen und im Antriebswasser der Wasserstrahlpumpe (10) gelöst wird.

7. Verfahren gemäß einem der Ansprüche 1 bis 5, **dadurch gekennzeichnet, dass** das gebildete, gasförmige Chlordioxid über eine Leitung (7) aus dem Reaktor (3) entnommen und in frischem Wasser in einen weiteren Behälter (4) gelöst wird, wobei der Behälter (4) über eine Leitung (13) mit der Vakuumpumpe (10) verbunden ist.

8. Verfahren gemäß einem der Ansprüche 1 bis 7, **dadurch gekennzeichnet, dass** die verbrauchte Reaktionslösung aus der letzten Reaktorkammer (6) des Reaktors (3) über eine Leitung (11), die mit einer Pumpe (9) und gegebenenfalls einem Ventil ausgerüstet ist, entnommen wird.

9. Verfahren gemäß einem der Ansprüche 2 bis 7, **dadurch gekennzeichnet, dass** verbrauchte Reaktionslösung aus der letzten Reaktorkammer (6) entnommen wird, indem eine Leitung zur Abfuhr (11) mit dem Reaktor (3) ein System kommunizierender Rohre bildet.

10. Verfahren gemäß einem der Ansprüche 1 bis 9, **dadurch gekennzeichnet, dass** die Leitungen 1a und 2a Kapillaren darstellen, deren Durchmesser auf das verwendete Vakuum abgestimmt werden, so dass die Ausgangsstoffe durch das Zusammenwirkung von Kapillaren und Vakuum in die oberste Reaktorskammer dosiert werden.

11. Vorrichtung zur chargenweisen Herstellung von Chlordioxid gemäß einem der Ansprüche 1 bis 10, die
- einen Reaktor (3) zur Umsetzung von Chlorit mit Säure und
- eine Einrichtung zur Entnahme des gebildeten, gasförmigen Chlordioxids aus dem Reaktor (3),
umfasst,
**dadurch gekennzeichnet, dass** der Reaktor (3) durch mindestens zwei aus einem porösen Material ausgeführte Trennwände (3a) in mindestens drei Reaktorkammern (5, 6) zur Umsetzung von Chlorit mit Säure unterteilt ist, und die Einrichtung zur Entnahme des Chlordioxids eine Vakuumpumpe (10) und eine Gaszufuhr (8) umfasst, wobei die erste Reaktorkammer (5) getrennte Leitungen (1a, 2a) mit Durchflussbegrenzungsmitteln für die Zufuhr von Chlorit und Säure mit Hilfe der Vakuumpumpe (10) aufweist, die letzte Reaktorkammer (6) eine Gaszufuhr aufweist und die erste Reaktorkammer (5) zur Entnahme des gebildeten, gasförmigen Chlordioxid in einem Gemisch mit dem zugeführten Gas mit der Vakuumpumpe (10) verbunden ist und wobei die Trennwände so ausgebildet sind, dass bei der Durchführung der Umsetzung in jeder der Reaktorkammern eine flüssige Phase und eine Gasphase vorliegt, indem die flüssige Phase von der Trennwand und dem Gas in der jeweiligen Reaktorkammer gehalten wird, bis die Umsetzung beendet ist.

12. Vorrichtung gemäß Anspruch 11, **dadurch gekennzeichnet, dass** der Reaktor (3) über 2 bis 10 aus einem porösen Material ausgeführten Trennwände (3a, 3b, 3c) in 3 bis 11 Reaktorkammern (5, 5a, 6, 6a), bevorzugt über 2 bis 5 aus einem porösen Material ausgeführten Trennwände (3a, 3b, 3c) in 3 bis 6 Reaktorkammern (5, 5a, 6, 6a), unterteilt ist.

13. Vorrichtung gemäß Anspruch 11 oder 12, **dadurch gekennzeichnet, dass** die Vakuumpumpe (10) eine Wasserstrahlpumpe ist.

14. Vorrichtung gemäß mindestens einem der Ansprüche 11 bis 13, **dadurch gekennzeichnet, dass** die Vakuumpumpe (10) über eine Leitung (13) entweder
(a) mit einem weiteren Behälter (4) oder
(b) mit der ersten Reaktorkammer (5) des Reaktors (3),
verbunden ist, so dass im Falle (a) in dem Behälter (4) ein geringerer Druck als in dem Reaktor erzeugt wird und über die Gaszufuhr (8) zugeführtes Gas zusammen mit dem Chlordioxid über eine Leitung (7) aus der ersten Reaktorkammer (5) in den weiteren Behälter (4) überführt wird oder im Falle (b) über die Gaszufuhr (8) zugeführtes Gas zusammen mit dem Chlordioxid über die Leitung (13) aus der ersten Reaktorkammer (5) direkt im Antriebswasser dieser Wasserstrahlpumpe (10) gelöst wird.

15. Vorrichtung gemäß mindestens einem der Ansprüche 11 bis 14, **dadurch gekennzeichnet, dass** eine Einrichtung zur Falschluftsteuerung (16), vorzugsweise eine Kapillare, an der ersten Reaktorkammer (5) vorgesehen ist.

16. Vorrichtung gemäß mindestens einem der Ansprüche 11 bis 15, **dadurch gekennzeichnet, dass** der Reaktor (3) aus chlordioxidbeständigen Materialien, insbesondere aus Glas ist.

17. Vorrichtung gemäß mindestens einem der Ansprüche 11 bis 16, **dadurch gekennzeichnet, dass** die Leitungen 1a und 2a Kapillaren sind, deren Durchmesser auf das verwendete Vakuum abgestimmt ist, so dass die Ausgangsstoffe durch das Zusammenwirkung von Kapillaren und Vakuum in die erste Reaktorskammer dosiert werden.

## Claims

1. Method for the production of chlorine dioxide, wherein:
- chlorite is reacted with acid in a reactor (3) in an aqueous solution and
- the formed gaseous chlorine dioxide is removed from the reactor (3) with the aid of a vacuum pump (10),
**characterised in that** the reactor (3), by means of at least two separating walls (3a) consisting of a porous material, is subdivided into at least three reactor chambers (5, 6) for the reaction of chlorite with acid, chlorite and acid are supplied as starting materials in the first reactor chamber (5) via respective separate conduits (1a, 2a) with the aid of flow limiting means and the vacuum of the vacuum pump (10), gas is supplied in the last reactor chamber (6) and the formed gaseous chlorine dioxide in a mixture with the supplied gas is removed from the first reactor chamber (5) and transferred into water,
wherein the supply of the source materials takes place discontinuously, there is a liquid phase and a gas phase in each of the reactor chambers when carrying out the reaction, the liquid phase is held in the respective reactor chamber by means of the separating wall and the gas until the reaction is stopped, by the vacuum being disconnected and the liquid phase being discharged from the lowermost reactor chamber, wherein the liquid phases stream in from the preceding reactor chambers.

2. Method according to claim 1, **characterised in that** the reactor chambers are arranged vertically and the reaction solution flows through the reactor (3) due to the force of gravity.

3. Method according to claim 1, **characterised in that** the reactor chambers are arranged horizontally, vertically or vertically and horizontally.

4. Method according to claim 1, 2 or 3, **characterised in that** air, carbon dioxide, nitrogen or another chlorine dioxide-stable gas is used as gas.

5. Method according to one of claims 1 to 4, **characterised in that** a water jet pump is used as a vacuum pump (10), wherein the water pressure is preferably kept constant in the water jet pump.

6. Method according to claim 5, **characterised in that** the formed gaseous chlorine dioxide is removed from the reactor (3) via a conduit (13) which connects the first reactor chamber (5) to the water jet pump (10), and the formed gaseous chlorine dioxide is dissolved in the driving water of the water jet pump (10).

7. Method according to one of claims 1 to 5, **characterised in that** the formed gaseous chlorine dioxide is removed from the reactor (3) via a conduit (7) and is dissolved in fresh water in a further container (4), wherein the container (4) is connected to the vacuum pump (10) via a conduit (13).

8. Method according to one of claims 1 to 7, **characterised in that** the used reaction solution is removed from the last reactor chamber (6) of the reactor (3) via a conduit (11) which is equipped with a pump (9) and, if necessary, a valve.

9. Method according to one of claims 2 to 7, **characterised in that** the used reaction solution is removed from the last reactor chamber (6) by a conduit for discharge (11) forming a system of communicating tubes with the reactor (3).

10. Method according to one of claims 1 to 9, **characterised in that** the conduits 1a and 2a represent capillaries whose diameter is matched to the vacuum used, such that the starting materials are dosed into the uppermost reactor chamber by the interaction of the capillaries with the vacuum.

11. Device for the manufacturing of chlorine dioxide in batches according to one of claims 1 to 10, which comprises
- a reactor (3) for the reaction of chlorite with acid and
- a device for the removal of the formed gaseous chlorine dioxide from the reactor (3),
**characterised in that** the reactor (3) is subdivided into at least three reactor chambers (5, 6) for the reaction of chlorite with acid by at least two separating walls (3a) made from a porous material, and the device for the removal of the chlorine dioxide comprises a vacuum pump (10) and a gas supply (8), wherein the first reactor chamber (5) has separate conduits (1a, 2a) with flow limiting means for the supply of chlorite and acid with the aid of the vacuum pump (10), the last reactor chamber (6) has a gas supply, and the first reactor chamber (5) is connected to the vacuum pump (10) for the removal of the formed gaseous chlorine dioxide in a mixture with the supplied gas and wherein the separating walls are formed so that there is a liquid phase and a gas phase in each of the reactor chambers when carrying out the reaction, by the liquid phase being held in the respective reactor chamber by means of the separating wall and the gas until the reaction is complete.

12. Device according to claim 11, **characterised in that** the reactor (3) is subdivided into 3 to 11 reactor chambers (5, 5a, 6, 6a) via 2 to 10 separating walls (3a, 3b, 3c) made from a porous material, preferably into 3 to 6 reactor chambers (5, 5a, 6, 6a) via 2 to 5 separating walls (3a, 3b, 3c) made from a porous material.

13. Device according to claim 11 or 12, **characterised in that** the vacuum pump (10) is a water jet pump.

14. Device according to at least one of claims 11 to 13, **characterised in that** the vacuum pump (10) is connected via a conduit (13) either
(a) to a further container (4) or
(b) to the first reactor chamber (5) of the reactor (3),
so that, in case (a), a lower pressure is created in the container (4) than in the reactor and gas supplied via the gas supply (8) is transferred together with the chlorine dioxide via a conduit (7) from the first reactor chamber (5) into the further container (4) or, in case (b), gas supplied via the gas supply (8) is dissolved together with the chlorine dioxide via the conduit (13) from the first reactor chamber (5) directly in the driving water of this water jet pump (10).

15. Device according to at least one of claims 11 to 14, **characterised in that** a device for false air control (16), preferably a capillary, is provided at the first reactor chamber (5).

16. Device according to at least one of claims 11 to 15, **characterised in that** the reactor (3) is made from chlorine dioxide-resistant materials, in particular glass.

17. Device according to at least one of claims 11 to 16, **characterised in that** the conduits 1a and 2a are capillaries whose diameter is matched to the vacuum used, such that the starting materials are dosed into the first reactor chamber by the interaction between the capillaries and the vacuum.

## Revendications

1. Procédé pour la préparation de dioxyde de chlore, dans lequel
- du chlorite est transformé en solution aqueuse avec un acide dans un réacteur (3) et
- le dioxyde de chlore gazeux formé est prélevé du réacteur (3) à l'aide d'une pompe à vide (10),
**caractérisé en ce que** le réacteur (3) est divisé par au moins deux parois de séparation (3a) en un matériau poreux en au moins trois chambres (5, 6) de réacteur pour la transformation de chlorite avec de l'acide, du chlorite et de l'acide sont introduits en tant que substances de départ dans la première chambre (5) de réacteur, à chaque fois via des conduites (1a, 2a) séparées à l'aide de moyens de limitation du débit et du vide de la pompe à vide (10), du gaz est introduit dans la dernière chambre (6) de réacteur et le dioxyde de chlore gazeux formé est prélevé de la première chambre (5) de réacteur dans un mélange avec le gaz introduit et transféré dans de l'eau, l'introduction des substances de départ ayant lieu de manière discontinue, une phase liquide et une phase gazeuse se trouvant dans chacune des chambres de réacteur lors de la réalisation de la transformation, la phase liquide étant maintenue par la paroi de séparation et le gaz dans chaque chambre de réacteur jusqu'à ce que la transformation soit terminée, **en ce que** le vide est interrompu et la phase liquide est évacuée de la chambre de réacteur inférieure, les phases liquides des chambres de réacteur en amont s'écoulant à sa suite.

2. Procédé selon la revendication 1, **caractérisé en ce que** les chambres de réacteur sont disposées verticalement et la solution réactionnelle s'écoule à travers le réacteur (3) en raison de la gravité.

3. Procédé selon la revendication 1, **caractérisé en ce que** les chambres de réacteur sont disposées horizontalement, verticalement ou verticalement et horizontalement.

4. Procédé selon la revendication 1, 2 ou 3, **caractérisé en ce que** de l'air, du dioxyde de carbone, de l'azote ou un autre gaz stable au dioxyde de chlore est utilisé comme gaz.

5. Procédé selon l'une quelconque des revendications 1 à 4, **caractérisé en ce qu'**une pompe à jet d'eau est utilisée comme pompe à vide (10), la pression d'eau dans la pompe à jet d'eau étant de préférence maintenue constante.

6. Procédé selon la revendication 5, **caractérisé en ce que** le dioxyde de chlore gazeux formé est prélevé du réacteur (3) via une conduite (13) qui relie la première chambre (5) de réacteur à la pompe à jet d'eau (10) et est dissous dans l'eau motrice de la pompe à jet d'eau (10).

7. Procédé selon l'une quelconque des revendications 1 à 5, **caractérisé en ce que** le dioxyde de chlore gazeux formé est prélevé du réacteur (3) via une conduite (7) et dissous dans de l'eau fraîche dans un autre récipient (4), le récipient (4) étant relié à la pompe à vide (10) via une conduite (13).

8. Procédé selon l'une quelconque des revendications 1 à 7, **caractérisé en ce que** la solution réactionnelle consommée est prélevée de la dernière chambre (6) du réacteur (3) via une conduite (11) qui est pourvue d'une pompe (9) et le cas échéant d'une soupape.

9. Procédé selon l'une quelconque des revendications 2 à 7, **caractérisé en ce que** la solution réactionnelle consommée est prélevée de la dernière chambre (6) de réacteur **en ce qu'**une conduite pour l'évacuation (11) forme, avec le réacteur (3), un tuyau de communication avec le système.

10. Procédé selon l'une quelconque des revendications 1 à 9, **caractérisé en ce que** les conduites 1a et 2a représentent des capillaires dont les diamètres sont adaptés au vide utilisé de telle sorte que les substances de départ sont dosées par l'interaction des capillaires et du vide dans la chambre de réacteur supérieure.

11. Dispositif pour la préparation par lots de dioxyde de chlore selon l'une quelconque des revendications 1 à 10, qui comprend
- un réacteur (3) pour la transformation de chlorite avec de l'acide et
- un dispositif pour le prélèvement du dioxyde de chlore gazeux formé du réacteur (3),
**caractérisé en ce que** le réacteur (3) est divisé par au moins deux parois de séparation (3a) réalisées en un matériau poreux en au moins trois chambres (5, 6) de réacteur pour la transformation de chlorite avec de l'acide et le dispositif comprend une pompe à vide (10) et une arrivée de gaz (8) pour le prélèvement du dioxyde de chlore, la première chambre (5) de réacteur présentant des conduites séparées (1a, 2a) avec des moyens de limitation du débit pour l'alimentation en chlorite et en acide à l'aide de la pompe à vide (10), la dernière chambre (6) de réacteur présentant une arrivée de gaz et la première chambre (5) de réacteur étant reliée à la pompe à vide (10) pour le prélèvement du dioxyde de chlore gazeux formé dans un mélange avec le gaz introduit et les parois de séparation étant conçues de manière telle que lors de la réalisation de la transformation une phase liquide et une phase gazeuse se trouvent dans chacune des chambres de réaction **en ce que** la phase liquide est maintenue dans la chambre de réacteur en question par la paroi de séparation et le gaz jusqu'à ce que la transformation soit terminée.

12. Dispositif selon la revendication 11, **caractérisé en ce que** le réacteur (3) est divisé via 2 à 10 parois de séparation (3a, 3b, 3c) réalisées en un matériau poreux en 3 à 11 chambres (5, 5a, 6, 6a) de réacteur, de préférence via 2 à 5 parois de séparation (3a, 3b, 3c) réalisées en un matériau poreux en 3 à 6 chambres (5, 5a, 6, 6a) de réacteur.

13. Dispositif selon la revendication 11 ou 12, **caractérisé en ce que** la pompe à vide (10) est une pompe à jet d'eau.

14. Dispositif selon au moins l'une quelconque des revendications 11 à 13, **caractérisé en ce que** la pompe à vide (10) est reliée via une conduite (13) soit
(a) à un autre récipient (4) soit
(b) à la première chambre (5) du réacteur (3),
de telle sorte que dans le cas (a), une pression inférieure à celle dans le réacteur est générée dans le récipient (4) et le gaz introduit via l'arrivée de gaz (8) est transféré ensemble avec le dioxyde de chlore via une conduite (7) de la première chambre (5) de réacteur dans l'autre récipient (4) ou, dans le cas (b), le gaz introduit via l'arrivée de gaz (8) est dissous, ensemble avec le dioxyde de chlore, via la conduite (13) depuis la première chambre (5) de réacteur directement dans l'eau motrice de la pompe à jet d'eau (10).

15. Dispositif selon au moins l'une quelconque des revendications 11 à 14, **caractérisé en ce qu'**il présente un dispositif pour la commande (16) d'air parasite, de préférence un capillaire, au niveau de la première chambre (5) de réacteur.

16. Dispositif selon au moins l'une quelconque des revendications 11 à 15, **caractérisé en ce que** le réacteur (3) est constitué par des matériaux résistants au dioxyde de chlore, en particulier en verre.

17. Dispositif selon au moins l'une quelconque des revendications 11 à 16, **caractérisé en ce que** les conduites 1a et 2a sont des capillaires dont le diamètre est adapté au vide utilisé de telle sorte que les substances de départ sont dosées par l'interaction des capillaires et du vide dans la première chambre de réacteur.
